# EUROPÄISCHE PATENTSCHRIFT

(11) **EP 0 502 232 B1**
(45) Veröffentlichungstag und Bekanntmachung des Hinweises auf die Patenterteilung: **19.05.1993**
(21) Anmeldenummer: 91103455.1
(22) Anmeldetag: 07.03.1991
(51) Int. Cl.: C02F 3/12, C02F 11/00, C09D 7/00

(54) **Verfahren zum Entsorgen von aus einer Beschichtungsanlage stammendem Organikschlamm, insbesondere Lackschlamm**
Process for disposal of organic sludge, especially of paint sludge, originating from a coating installation
Procédé pour évacuer des boues organiques, en particulier les boues de laque provenant des installations d'enduisage

(43) Veröffentlichungstag der Anmeldung: 09.09.1992
(73) Patentinhaber: Parkner GmbH, D-45659 Recklinghausen (DE)
(72) Erfinder: Stuckmann, Otto, Dipl.-Ing., W-4350 Recklinghausen (DE); Hombach, Peter, Prof. Dr., W-4300 Essen 14 (DE); Rüger, Wolfgang, Prof. Dr., W-4322 Sprockhövel 2 (DE); Grosse, Karl, Dr., W-5802 Wetter 4 (DE); Leiner, Wolfgang, Dr., W-4630 Bochum (DE); Schmidt, Winfried, Prof. Dr., W-4400 Münster (DE); Diekmann, Reinhard, Dr., W-5810 Witten (DE)
(74) Vertreter: Masch, Karl Gerhard, Dr.

(56) Entgegenhaltungen:
- EP-A- 0 064 960
- EP-A- 0 237 001
- CH-A- 627 718
- CHEMICAL ABSTRACTS, vol. 93, no. 12, 22. September 1980, Columbus, Ohio, US; abstract no. 119856U, HARADA,SHUKUYUKI ET AL.: 'Biological treatment of wastewater' Seite 313 ;Spalte L ;

## Beschreibung

Die Erfindung betrifft ein Verfahren zum Entsorgen von aus einer Beschichtungsanlage stammendem Organikschlamm, insbesondere Lackschlamm aus einem Absetzbecken für Umlaufwasser einer Spritzlackierung, wobei der Schlamm eingedickt und erwärmt wird. Entsorgen meint im Rahmen der Erfindung auch eine Verwertung von Bestandteilen des Organikschlammes. Organikschlamm umfaßt organische Bestandteile enthaltenden Schlamm.

Lackschlämme entstehen durch den üblicherweise beim Spritzlackieren in und an Wasserwänden abgeschiedenen Overspray. Damit die Auswaschflotten funktionstüchtig bleiben, muß der Overspray "entklebt" werden, d.h. mit Hilfe geeigneter Zusätze das Entstehen von diskreten Partikeln gefördert werden, die je nach Art der Zusatzstoffe absinken oder aufschwimmen. In der Großserienlackierung von Automobilen werden als "Entkleber" überwiegend Bentonite (Tonmineralien), in einigen Betrieben aber auch Wachse eingesetzt. Weitere gebräuchliche Zusatzstoffe sind Entschäumer, Sedimentierhilfen und Biozide.

Insbesondere durch den Einsatz der sogenannten Wasserlacke erfolgt eine verstärkte organische Belastung der Auswaschflotten durch Lösungsmittel. Zusätzliche organische Frachten werden über die Entschäumer, Sedimentierhilfen und Biozide eingetragen. Als Folge dieser sich akkumulierenden organischen Belastung muß das Wasser der Auswaschflotten in Zeitabständen von vier bis zwölf Monaten ausgetauscht bzw. entsorgt werden. Der z.B. mittels Kammerfilterpressen entwässerte Lackschlamm wird mit einem Trockensubstanzgehalt von etwa 50 Gew.-% deponiert oder verbrannt.

Da eine Deponierung der Lackschlämme in Zukunft aus gesetzlichen Gründen nicht mehr möglich ist, bleibt die Verbrennung der Schlämme, von der die Erfindung ausgeht, als derzeit einzige Alternative. Dieser Entsorgungspfad bereitet Probleme, da keine ausreichenden Verbrennungskapazitäten zur Verfügung stehen und die Verbrennung nicht als Verwertung anerkannt wird. Daher werden zur Zeit unterschiedliche Recyclingansätze auf ihre Praxistauglichkeit geprüft. Im einzelnen sind dies die Rückführung des Lackschlammes als Zusatz zu Lacken mit verminderten Qualitätsanforderungen (Füller), die Einarbeitung der Lackschlämme in Dichtmassen oder bituminöse Produkte, der Ersatz von Phenolharzen durch Lackschlämme bei Kunststofformteilen und die Rückgewinnung von Titandioxid nach Verbrennung der Lackschlämme. Die genannten Verfahren unterliegen einer Reihe von einschränkenden Bedingungen. Bis auf das letztgenannte Verfahren stellen alle Konzepte hohe Anforderungen an das anfallende Koagulat (Alter, Verunreinigungsgrad, biologische Belastung, Geruch) und sind zumeist nur für einen geringen Anteil der anfallenden Lackschlämme geeignet. Das letztgenannte Konzept beinhaltet die unerwünschte Verbrennung und der Erlös aus dem rückgewonnenen Titandioxid ist im Vergleich zu dem aufwendigen Aufarbeitungsverfahren aus ökonomischer Sicht nicht tragbar.

Der vorliegenden Erfindung liegt daher die Aufgabe zugrunde, im Rahmen eines Verfahrens der eingangs genannten Art den Organikschlamm zu entgiften und in ein inertes Produkt zu überführen, wobei die Masse der zu deponierenden Reststoffe deutlich reduziert wird.

Hierzu lehrt die Erfindung, daß der Schlamm in einer niedermolekulare organische Verbindungen unter aeroben Bedingungen umsetzenden ersten Biostufe behandelt wird, aus welcher ein Schlamm mit erhöhtem Trockensubstanzgehalt und ein Klarlauf abgezogen werden, daß der aus der ersten Biostufe abgezogene Schlamm in einer höhermolekulare organische Verbindungen unter anaeroben Bedingungen umsetzenden zweiten Biostufe nachbehandelt wird, aus welcher ein Schlamm mit erhöhtem Trockensubstanzgehalt und ein Klarlauf abgezogen werden, daß der aus der zweiten Biostufe abgezogene Schlamm zu einem inerten Material, insbesondere Granulat, getrocknet wird und das beim Trocknen gebildete Kondensat in die erste Biostufe eingeführt wird, und daß die Klarläufe der beiden Biostufen entkeimt und anschließend z.B. in das erwähnte Umlaufwasser rückgeführt werden.

Das erfindungsgemäße Verfahren unterscheidet sich von allen anderen bekannten Konzepten durch den biotechnischen Ansatz und durch seine universellere Anwendbarkeit. So kann das erfindungsgemäße Verfahren praktisch auf alle in der Praxis anfallenden Lackschlämme, so z.B. Lackschlämme von Hydrolacken, angewendet werden. Der wesentliche Vorteil des erfindungsgemäßen Verfahrens ist jedenfalls darin zu sehen, daß das Umlaufwasser nicht mehr ausgetauscht zu werden braucht, d.h. die Lackieranlagen vielmehr abwasserfrei gefahren werden können. Hinzu kommt, daß das zu deponierende Produkt in erheblich geringeren Mengen als bisher anfällt, und zwar als inertes Material, insbesondere Granulat, das überall deponiert werden kann.

Für die weitere Ausgestaltung bestehen im Rahmen der Erfindung mehrere Möglichkeiten. So sollte der aus der ersten Biostufe abgezogene und der zweiten Biostufe zugeführte Schlamm einen Trockensubstanzgehalt von 5 bis 15, insbesondere 10 Gew.-% aufweisen. Der aus der zweiten Biostufe abgezogene und der Trocknung zugeführte Schlamm sollte insoweit dagegen einen Trockensubstanzgehalt von 40 bis 60, insbesondere 50 Gew.-% aufweisen. Das Trocknen des aus der zweiten Biostufe abgezogenen Schlamms kann im Temperaturbereich von 70 bis 120 °C vorgenommen werden; bevorzugt ist aber eine Durchführung der Trocknung bei Unterdruck und einer Temperatur von 70 bis 80, insbesondere 75 °C. Das Entkeimen der Klarläufe der Biostufen kann durch Ozonierung, UV-Bestrahlung und/oder Peroxidbeigabe durchgeführt werden.

Eine weiterhin bevorzugte Ausführungsform, die sich durch eine weitere Reduzierung des zu deponierenden inerten Granulates auszeichnet, ist dadurch gekennzeichnet, daß der aus dem Absetzbecken abgezogene Schlamm zunächst durch Dekantieren in einen Dekanterschlamm mit einem Trockensubstanzgehalt von 40 bis 60 Gew.-%, vorzugsweise 50 Gew.-% und ein Dekanterabwasser getrennt wird, daß der Dekanterschlamm einer Harzextraktion unterworfen und anschließend in die erste aerobe Biostufe überführt wird, und daß das Dekanterabwasser in einer zusätzlichen aeroben Biostufe behandelt wird, deren Überschußbiomasse der zweiten anaeroben Biostufe zugeführt und deren Klarlauf mit den anderen Klarläufen vereinigt wird. Über die Harzextraktion können nämlich wiederverwendbare Produkte gewonnen werden; hinzu kommt, daß ansonsten aufgrund von biologischen Verunreinigungen bestehende Geruchsprobleme entfallen.

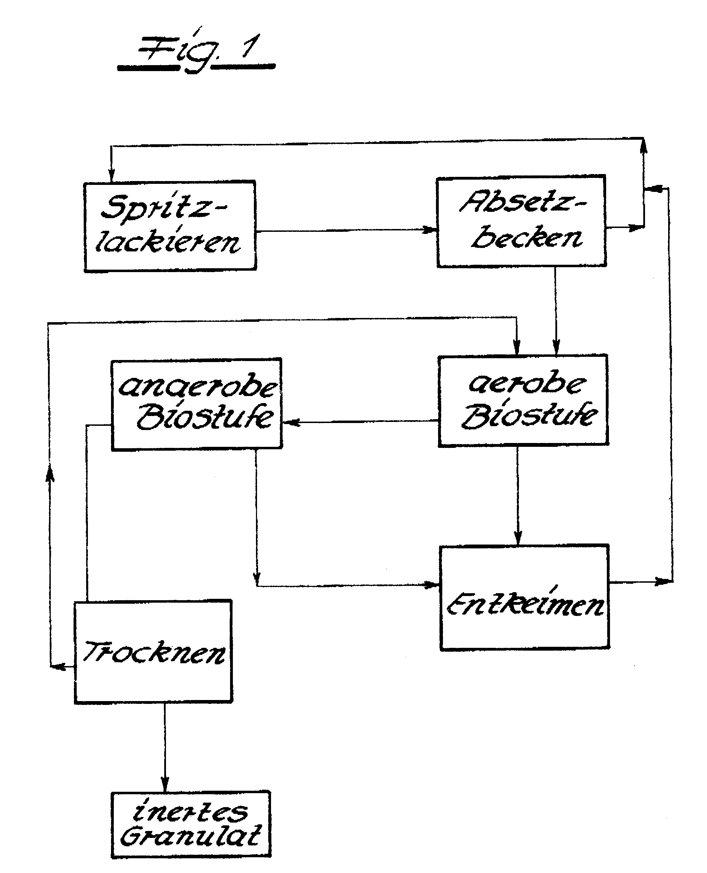

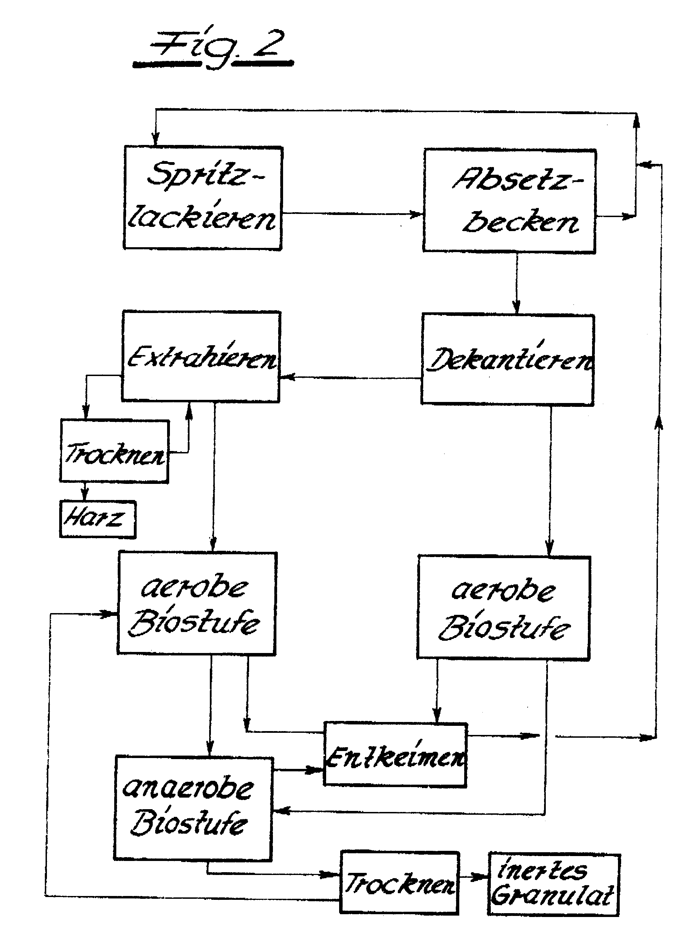

Im folgenden wird die Erfindung anhand einer Zeichnung näher erläutert, deren Fig. 1 und 2 jeweils ein Verfahrensschema zeigen.

Die in den beiden Schemata dargestellten Verfahren dienen dem Entsorgen von Lackschlamm aus einem Absetzbecken für Umlaufwasser einer Spritzlackierung. Bei der Ausführungsform nach Fig. 1 wird der mit einem Trockensubstanzgehalt von etwa 2 Gew.-% aus dem Absetzbecken entfernte Schlamm einer ersten Biostufe in Form eines Suspensionsbioreaktors zugeführt, in der niedermolekulare organische Verbindungen, insbesondere Lösungsmittel, unter aeroben Bedingungen umgesetzt werden; hierbei werden natürlich vorkommende, aber adaptierte und vermehrte Mischkulturen von Mikroorganismen eingesetzt. Aus der ersten Biostufe werden ein Schlamm mit einem Trockensubstanzgehalt von etwa 10 Gew.-% und ein Klarlauf abgezogen. Dieser aus der ersten Biostufe abgezogene Schlamm wird in einer zweiten Biostufe in Form eines Suspensionsbioreaktors nachbehandelt, in der feste oder gelöste höhermolekulare organische Verbindungen unter anaeroben Bedingungen umgesetzt werden; auch hier werden wiederum natürlich vorkommende, aber adaptierte und vermehrte Mischkulturen von entsprechenden Mikroorganismen eingesetzt. Aus der zweiten Biostufe werden ein Schlamm mit einem Trockensubstanzgehalt von etwa 50 Gew.-% und ein Klarlauf abgezogen. Der aus der zweiten Biostufe abgezogene Schlamm wird bei etwa 75 °C unter einem Druck von 0,2 bis 1 bar zu einem zu deponierenden inerten Granulat getrocknet. Das beim Trocknen gebildete Kondensat wird in die erste aerobe Biostufe eingeführt. Die Klarläufe der beiden Biostufen werden durch Ozonierung, UV-Bestrahlung und/oder Peroxidbeigabe entkeimt und danach in das Umlaufwasser der Spritzlackierung rückgeführt. Ein Austausch dieses Umlaufwassers ist nicht mehr erforderlich.

Bei der Ausführungsform nach Fig. 2 wird der aus dem Absetzbecken abgezogene Lackschlamm noch einer besonderen Behandlung unterworfen, bevor er in die erste aerobe Biostufe eingeführt wird. Zunächst wird nämlich der aus dem Absetzbecken abgezogene Schlamm durch Dekantieren in einen Dekanterschlamm mit einem Trockensubstanzgehalt von etwa 50 Gew.-% und ein Dekanterabwasser getrennt. Der Dekanterschlamm wird einer Harzextraktion unterworfen und anschließend - wie schon gesagt - in die erste aerobe Biostufe überführt. Auf der anderen Seite wird das Dekanterabwasser in einer zusätzlichen aeroben Biostufe behandelt, deren Überschußbiomasse der zweiten anaeroben Biostufe zugeführt und deren Klarlauf mit den anderen Klarläufen zum Entkeimen vereinigt wird. Die Harzextraktion ist in eine Harzgewinnung mit geschlossenem Lösungsmittelkreislauf eingebunden. Im einzelnen wird hierzu der Dekanterschlamm mit einem hydrophoben Lösungsmittel versetzt und vermischt, wobei das Harz in die hydrophobe Phase übertritt. Anschließend wird die hydrophobe Phase abgetrennt und das Lösungsmittel abdestilliert sowie in den Kreislauf zurückgeführt: der Rückstand ist verwertbares Harz.

## Patentansprüche

1. Verfahren zum Entsorgen von aus einer Beschichtungsanlage stammendem Organikschlamm, insbesondere Lackschlamm aus einem Absetzbecken für Umlaufwasser einer Spritzlackierung, wobei der Schlamm eingedickt und erwärmt wird, **dadurch gekennzeichnet,** daß der Schlamm in einer niedermolekulare organische Verbindungen unter aeroben Bedingungen umsetzenden ersten Biostufe behandelt wird, aus welcher ein Schlamm mit erhöhtem Trockensubstanzgehalt und ein Klarlauf abgezogen werden, daß der aus der ersten Biostufe abgezogene Schlamm in einer höhermolekulare organische Verbindungen unter anaeroben Bedingungen umsetzenden zweiten Biostufe nachbehandelt wird, aus welcher ein Schlamm mit erhöhtem Trockensubstanzgehalt und ein Klarlauf abgezogen werden, daß der aus der zweiten Biostufe abgezogene Schlamm zu einem inerten Material getrocknet wird und das beim Trocknen gebildete Kondensat in die erste Biostufe eingeführt wird, und daß die Klarläufe der beiden Biostufen entkeimt und anschließend rückgeführt werden.

2. Verfahren nach Anspruch 1, dadurch gekennzeichnet, daß der aus der ersten Biostufe abgezogene und der zweiten Biostufe zugeführte Schlamm einen Trockensubstanzgehalt von 5 bis 15 Gew.-% aufweist.

3. Verfahren nach Anspruch 1 oder 2, dadurch gekennzeichnet, daß der aus der zweiten Biostufe abgezogene und der Trocknung zugeführte Schlamm einen Trockensubstanzgehalt von 40 bis 60 Gew.-% aufweist.

4. Verfahren nach einem der Ansprüche 1 bis 3, dadurch gekennzeichnet, daß der aus der zweiten Biostufe abgezogene Schlamm bei Unterdruck und einer Temperatur von 70 bis 80 °C getrocknet wird.

5. Verfahren nach einem der Ansprüche 1 bis 4, dadurch gekennzeichnet, daß die Klarläufe der Biostufen durch Ozonierung, UV-Bestrahlung und/oder Peroxidbeigabe entkeimt werden.

6. Verfahren nach einem der Ansprüche 1 bis 5, dadurch gekennzeichnet, daß der aus dem Absetzbecken abgezogene Schlamm zunächst durch Dekantieren in einen Dekanterschlamm mit einem Trockensubstanzgehalt von 40 bis 60 Gew.-% und ein Dekanterababwasser getrennt wird, daß der Dekanterschlamm einer Harzextraktion unterworfen und anschließend in die erste aerobe Biostufe überführt wird, und daß das Dekanterwasser in einer zusätzlichen aeroben Biostufe behandelt wird, deren Überschußbiomasse der zweiten anaeroben Biostufe zugeführt und deren Klarlauf mit den anderen Klarläufen vereinigt wird.

7. Verfahren nach Anspruch 6, dadurch gekennzeichnet, daß die Harzextraktion in eine Harzgewinnung mit geschlossenem Lösungsmittelkreislauf eingebunden ist.

## Claims

1. A process for the disposal of organic sludge, especially of paint sludge, originating from a coating installation, in which the sludge from a settling tank for water circulating in a spray-coating installation is thickened and heated, characterised in that the sludge is treated in a first bio-stage,, in which low-molecular organic compounds are degraded under aerobic conditions, to form a sludge having an increased dry matter content and a clarified outflow, that the sludge from the first bio-stage is further treated in a second bio-stage, in which higher-molecular organic compounds are degraded under anaerobic conditions, to form a sludge having an increased dry matter content and a clarified outflow, that the sludge from the second bio-stage is dried to form an inert material, the condensate formed during drying is returned to the first bio-stage, and that the clarified outflows from both bio-stages are sterilised and finally recirculated.

2. A process as in Claim 1, characterised in that the sludge transferred from the first bio-stage to the second bio-stage has a dry matter content of from 5 to 15 wt.%.

3. A process as in Claim 1 or 2, characterised in that the sludge taken from the second bio-stage and then dried has a dry matter content of from 40 to 60 wt.%.

4. A process as in any of Claims 1 to 3, characterised in that the sludge taken from the second bio-stage is dried under reduced pressure and at a temperature of from 70 to 80°C.

5. A process as in any of Claims 1 to 4, characterised in that the clarified outflows from the bio-stages are sterilised by ozonisation, UV irradiation and/or peroxide addition.

6. A process as in any of Claims 1 to 5, characterised in that the sludge taken from the settling tank is first separated by decanting into a decanter sludge of dry matter content from 40 to 60 wt.% and a decanter effluent, that the decanter sludge is subjected to a resin extraction and then transferred to the first aerobic bio-stage, and that the decanter effluent is treated in an additional aerobic bio-stage, the surplus bio-mass from which is transferred to the second anaerobic bio-stage, whilst the clarified effluent is added to the other clarified outflows.

7. A process as in Claim 6, characterised in that the resin extraction is integrated with a resin production system having a closed solvents cycle.

## Revendications

1. Procédé pour éliminer une boue organique provenant d'une installation d'enduction, notamment une boue de peinture provenant d'un bassin de décantation pour l'eau circulante d'une installation de peinture au pistolet, et selon lequel on épaissit et on chauffe la boue, caractérisé en ce qu'on traite la boue dans un premier étage biologique qui convertit des composés organiques à bas poids moléculaire dans des conditions aérobie et à partir duquel on prélève une boue possédant une teneur élevée en substances sèches et un écoulement clair, qu'on traite ensuite la boue prélevée du premier étage biologique, dans un second étage biologique qui convertit des composés organiques à poids moléculaire élevé, dans des conditions anaérobie et à partir duquel on prélève une boue possédant une teneur accrue en substances sèches et un écoulement clair, qu'on fait sécher la boue prélevée du second étage biologique, pour obtenir une matière inerte et qu'on introduit le condensat obtenu lors du séchage, dans le premier étage biologique, et qu'on stérilise les écoulements clairs délivrés par les deux étages biologiques et qu'on les introduit ensuite dans le cycle.

2. Procédé selon la revendication 1, caractérisé en ce que la boue, qui est prélevée du premier étage biologique et est envoyée au second étage biologique, possède une teneur en substances sèches comprise entre 5 et 15 % en poids.

3. Procédé selon la revendication 1 ou 2, caractérisé en ce que la boue prélevée du second étage biologique et que l'on soumet au séchage possède une teneur en substance sèche comprise entre 40 et 60 % en poids.

4. Procédé selon la revendication 1 à 3, caractérisé en ce qu'on fait sécher la boue tirée du second étage biologique, en présence d'une dépression et à une température comprise entre 70 et 80°C.

5. Procédé selon l'une des revendications 1 à 4, caractérisé en ce qu'on stérilise les écoulements clairs des étages biologiques par ozonisation, irradiation par le rayonnement ultraviolet et/ou addition de peroxyde.

6. Procédé selon l'une des revendications 1 à 5, caractérisé en ce qu'on sépare la boue prélevée du bassin de décantation, tout d'abord par décantation, en une boue décantée possédant une teneur en substances sèches comprise entre 40 et 60 % en poids et des eaux usées de décantation, qu'on soumet la boue décantée à une extraction de résine et qu'on l'envoie ensuite au premier étage biologique aérobie, et qu'on traite l'eau de décantation dans un étage biologique aérobie supplémentaire, dont la biomasse en excès est envoyée au second étage biologique anaérobie et dont l'écoulement clair est rassemblé avec les autres écoulements clairs.

7. Procédé selon la revendication 6, caractérisé en ce que l'extraction de résine est combinée à une récupération de résine avec une circulation du solvant en circuit fermé.
